# EUROPEAN PATENT SPECIFICATION

(11) **EP 2 215 357 B1**
(45) Date of publication and mention of the grant of the patent: **07.12.2011**
(21) Application number: 08842488.2
(22) Date of filing: 21.10.2008
(51) Int. Cl.: F03D 11/00, F03D 11/02, F16H 57/08

(54) **EPICYCLIC GEAR STAGE FOR A WIND TURBINE GEARBOX, A WIND TURBINE GEARBOX AND A WIND TURBINE**
PLANETENGETRIEBESTUFE FÜR EIN WINDTURBINENGETRIEBE, WINDTURBINENGETRIEBE UND WINDTURBINE
ÉTAGE DE TRAIN ÉPICYCLOÏDAL POUR BOÎTE D'ÉOLIENNE, BOÎTE DE VITESSE D'ÉOLIENNE ET ÉOLIENNE

(30) Priority: 22.10.2007 DK 200701514; 21.12.2007 DK 200701856; 21.12.2007 US 15799
(43) Date of publication of application: 11.08.2010
(73) Proprietor: Vestas Wind Systems A/S, 8940 Randers - SV (DK)
(72) Inventor: DEMTRÖDER, Jens, DK-8410 Rønde (DK); MOSTAFI, Abdelhalim, 70327 Stuttgart (DE)
(74) Representative: Olesen, Kaj
(86) International application number: PCT/DK2008/000369
(87) International publication number: WO 2009/052824

(56) References cited:
- EP-A- 1 538 332
- EP-A- 1 544 504
- WO-A-2005/050059
- WO-A-2007/016336

## Description

### Field of invention

The invention relates to an epicyclic gear stage according to the preamble of claim 1 and a wind turbine gearbox according to the preamble of claim 14.

### Description of the related art

One widely used gear for conventional industrial gearboxes is the epicyclic gear.

Various types of this gear have a planet carrier with one or two side flanges. In the case of two side, said flanges are normally connected by stanchions. For some embodiments the input, or drive-end (DE), connecting shaft is linked to either of the flanges and the whole arrangement is typically supported against a stationary frame by bearings on either flange.

The planet bearing may either be mounted on an axle that is supported in the two flanges or the bearings are integrated in the flanges. The design is capable of transferring high torque and to support spur as well as helical gearing.

For a planet carrier design including a two-sided flange and double-helical gears the German DE102004023151 describes a concept where the planets are mounted on their respective axles by a carrier section that is positioned off center relative to the central lateral plane of the planetary gear.

Problems related to the said two-flanged carriers which mark the current state-of-the-art are, that torque on the connecting chaft causes a wind-up of the DE-flange. relative to the opposite non-drive end (NDE) flange. The planet axles supported by these flanges are consequently inclined relative to the main axis of rotation, which causes misalignment and eventually edge loading of the gear teeth and planet bearings.

Stanchions between the two flanges are intended to prevent or reduce this wind-up, but their space is constrained by the design envelope of the planet gear. The wind-up can further be reduced by increasing flange thickness, planet carrier outer diameter, planet axle outer diameter or stanchion solidity, each of those adding to material consumption, weight and cost of the component.

The stiff concept of a double-flange carrier can in case of even small manufacturing errors lead to poor load distribution along the tooth width of the gear and between planets.

Furthermore in arrangements where the connecting shaft is not only loaded by torque but also by transverse forces and/or moments and where the bearing suspension on either flange against a stationary frame of the carrier becomes a rigid restraint, the arrangement can not rectify for misalignments.

Alternative planet carrier designs include single one-sided flange with cantilevered planet axles, typically used for lower torques, and single flange planet carrier with spur planet gears arranged on either side of this flange e.g. as presented in W003014566.

A problem related to single flange planet carriers with cantilevered shafts is that they are not suitable for high loads because bending of the cantilevered planet axle will cause misalignment of the gears.

Another design is the so called "FlexPin" design where the sun pinion and the ring gear are rigid while the planets are mounted to the planet carrier using flexible bolts - the "FlexPins" as will be known for a person skilled in the art.

A problem related to said FlexPin design is that they are not suitable for single-helical gears.

From EP 1 544 504 A it is known to connect the planet carrier of an epicyclic gear stage to the gearbox housing and a wind turbine rotor by means of elastic elements.

It is an object of the present invention to provide an advantageous construction of an epicyclic gearbox with improved load sharing between gears and to provide a technique without the above mentioned disadvantages.

### The invention

The invention relates to a wind turbine comprising a wind turbine gearbox with an epicyclic gear stage said epicyclic gear stage (11) comprising
a sun gear,
at least two planet gears, engaged with said sun gear, each supported by a planet gear shaft (16),
an annulus gear,
a first planet carrier flange connected to one side of the at least two of said planet gears,
and a second planet carrier flange connected to the other side of the at least two of said planet gears,
wherein torque from the wind turbine rotor is transferred via a torque transfer part connected to at least one of said first and second planet carrier flanges at one or more torque transferring zones,
where said one or more torque transferring zones are located between a first and a second plane, said planes being substantially perpendicular to an axis of rotation of the sun gear,
where the first plane is flush with the inner side of the first planet carrier flange at a the positions where the planet gear shafts are carried by the first planet carrier flange, and
where the second plane is flush with an inner side of the second planet carrier flange at a the positions where the planet gear shafts are carried by the second planet carrier flange.

Hereby it is ensured that gear misalignments are reduced and load sharing between gears comprised in said epicyclic gear stage is maintained even.

Furthermore the gear is capable of maintaining gears aligned to the axis of rotation such that an even load distribution along the facewidth of the gear is achieved over a wide torque range and without being affected by transverse forces and moments.

Further it ensures that a well balanced load distribution along gears under essentially any operation is obtained. This will in turn reduce the variance in operating conditions that the gears are exposed to and make the gears more robust.

Even further the variance in the operating conditions of the planet bearings is reduced and hence the robustness of this critical component is increased.

It is also ensured that single components of said eqicyclic gear stage can be replaced without replacing the entire gear stage or wind turbine gear box.

In one aspect of the invention, said a first and a second plane are planes substantial perpendicular to the axis of rotation of the sun gear, and
said first plane is flush with one end of the planet gears, and
said second plane is flush with the other end of the planet gears.

In another aspect of the invention, said a first and a second plane are planes substantial perpendicular to the axis of rotation of the sun gear, and
said first plane comprises a first point of the engaging surface of the planet gears, and
said second plane comprises a second point of the engaging surface of the planet gears.

Hereby it is ensured that said torque transferring zones can positioned in a plane whereby an essential alignment of e.g. the planet axle can be maintained independent of the applied external torque load. Furthermore it is ensured that the alignment of the planet axle is minimally impaired by transverse forces and bending moments acting a torque transfer part e.g. transferring torque from a wind turbine rotor to said epicyclic gear stage.

In a further aspect of the invention, said first planet carrier flange and said second planet carrier flange are joined together at said torque transferring zones such as by casting, welding, joint bolts, rivets etc. Hereby it is ensured that torque transfer between e.g. torque transfer parts and planet axles is done in an axial plane which is shaped such that a controlled deflection and hereby controlled misalignment of the gear contact is achieved.

In an even further aspect of the invention, said one side is the drive end of a gear stage and said other side is the non-drive end of a gear stage.

In another aspect of the invention, said torque transfer part and said first planet carrier flange are formed in one part. Hereby an enhanced torque transfer between the torque transfer part and said first planet carrier flange is achieved which in turn ensures that the alignment of the planet axle is minimally impaired.

In yet another aspect of the invention, said first planet carrier flange and said second planet carrier flange are formed in one part. Hereby an enhanced torque transfer between said first planet carrier flange and said second planet carrier flange is achieved which in turn ensures that the alignment of the planet axle is minimally impaired.

In a further aspect of the invention, said torque transfer part and said first planet carrier flange and said second planet carrier flange are formed in one part. Hereby a maximal degree of torque transfer between the components of said epicyclic gear stage is achieved which in turn ensures that the alignment of the planet axle is minimally impaired.

In an even further aspect of the invention, said torque transferring zones are located substantially at the midpoint of the distance between inner sides of first and second planet carriers. Hereby it is ensured that torque transfer between e.g. torque transfer parts and planet axles is done in the axial plane where the alignment of the planet axle is minimally impaired which in turn increases the robustness of this critical component.

In another aspect of the invention, said torque transferring zones are located at an offset from the middle point of the midpoint of the distance between inner sides of first and second planet carriers. Hereby it is possible to achieve a controlled gear misalignment e.g. in the order of magnitude of the sun pinion torsion.

In a further aspect of the invention, said offset is in the range of 0 to 50 % of the distance between inner sides of first and second planet carriers, preferable in the range of 5 to 20 %.

In another aspect of the invention, said sun gear and said planet gear and said annulus gear are single helical gears. Hereby an advantageous gear regarding smooth gear contact, reduction of vibration and load variation, as well as emission of noise is ensured.

In another aspect of the invention, said torque transfer part is connected to said least one of said first and second planet carrier flanges at one or more torque transferring zones by one or more couplings such as protrusions, cones, bolts etc.. Hereby it is ensured that load sharing between the planet gears i.e. isolation of transverse loads is improved and that dampening that prevents transmission of structure-bone noise via the torque transfer part is achieved e.g. for reducing the excitation of a wind turbine rotor blade by gear frequencies. Furthermore an easy assembling of the gear stage is achieved.

In yet another aspect of the invention, said annulus gear rotates during operation. Hereby it is ensured that torque is transferred for various types of gear stages e.g. with a fixed carrier, in which case torque transfer part 25 is part of the housing, or with a rotating carrier as part of a 3-way epicyclic gear.

### Figures

The invention will be described in the following with reference to the figures in which
- fig. 1: illustrates a large modern wind turbine including three wind turbine blades in the wind turbine rotor,
- fig. 2: illustrates schematically an embodiment of a wind turbine nacelle as seen from the side,
- fig. 3: illustrates schematically as an example of prior art, an embodiment of an epicyclic gearbox as seen from the front,
- fig. 4: illustrates schematically as an example of prior art, an embodiment of an epicyclic gearbox comprising a planet carrier as seen from the front,
- fig. 5: illustrates schematically as an example of prior art, a part of a cross section of one embodiment of an epicyclic gearbox as seen from the side,
- fig. 6: illustrates schematically a part of a cross section of a first embodiment of the invented epicyclic gearbox as seen from the side,
- fig. 7: illustrates schematically a part of a cross section of a second embodiment of the invention as seen from the side,
- fig. 8: illustrates schematically a part of a cross section of a third embodiment of the invention as seen from the side,
- fig. 9: illustrates schematically a part of a cross section of another embodiment of the invention comprising a protrusion in carrier flange to transmit torque,
- fig. 10: illustrates schematically a part of a cross section of another embodiment of the invention comprising a cone in the carrier flange to transmit torque,
- fig. 11: illustrates schematically a part of a cross section of yet another embodiment of the invention comprising bolts to connect torque transfer parts and carrier flanges,

### Description of known art

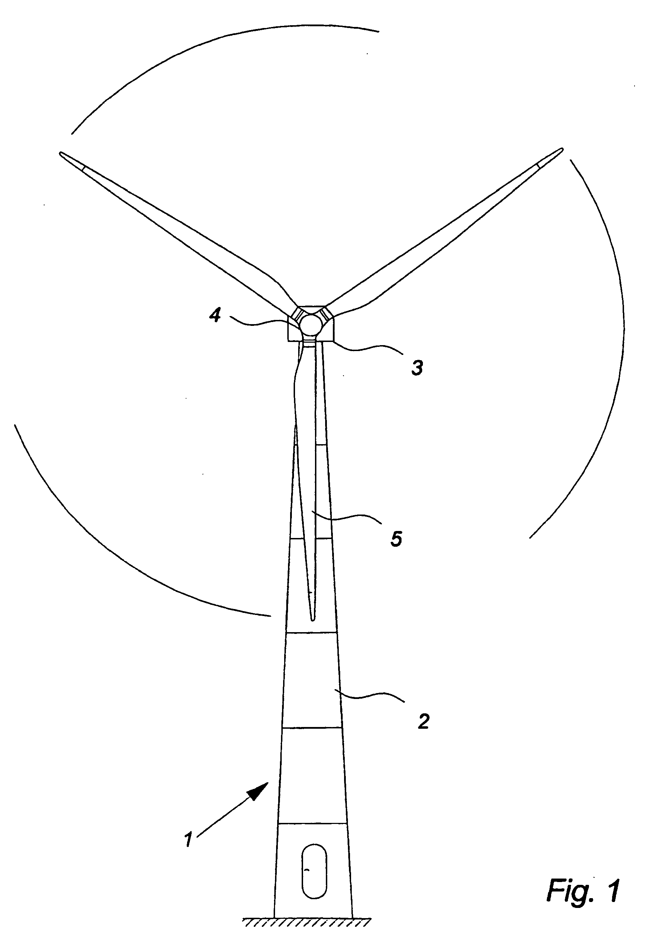

Fig. 1 illustrates a modem wind turbine 1, comprising a tower 2 and a wind turbine nacelle 3 positioned on top of the tower 2. The wind turbine rotor 4, comprising three wind turbine blades 5, is connected to the nacelle 3 through the low speed shaft 6 which extends out of the nacelle 3 front.

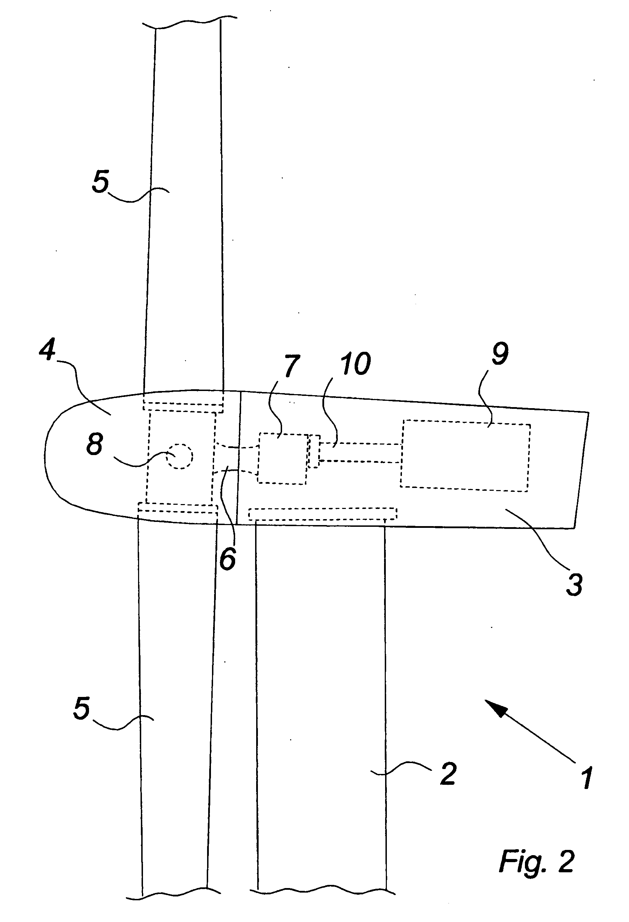

Fig. 2 illustrates an embodiment of a wind turbine nacelle 3, as seen from the side. The drive train in a traditional wind turbine 1 known in the art usually comprises a rotor 4 connected to a gearbox 7 by means of a low speed shaft 6. In this embodiment the rotor 4 comprise only two blades 5 connected to the low speed shaft 6 by means of a teeter mechanism 8, but in another embodiment the rotor 4 could comprise another number of blades 5, such as three blades 5, which is the most common number of blades 5 on modem wind turbines 1. In another embodiment the rotor 4 could also be connected directly to the gearbox 7.

The gearbox 7 is then connected to the generator 9 by means of a high speed shaft 10.

Because of the limited space in the nacelle 3 and to minimize the weight of the nacelle 3 the preferred gearbox 7 type in most modern wind turbines 1 is an epicyclic gearbox, but other gearbox 7 types are also feasible, such as one or more spur gearboxes, worm gearboxes, helical gearboxes or a combination of different transmission and gearbox 7 types.

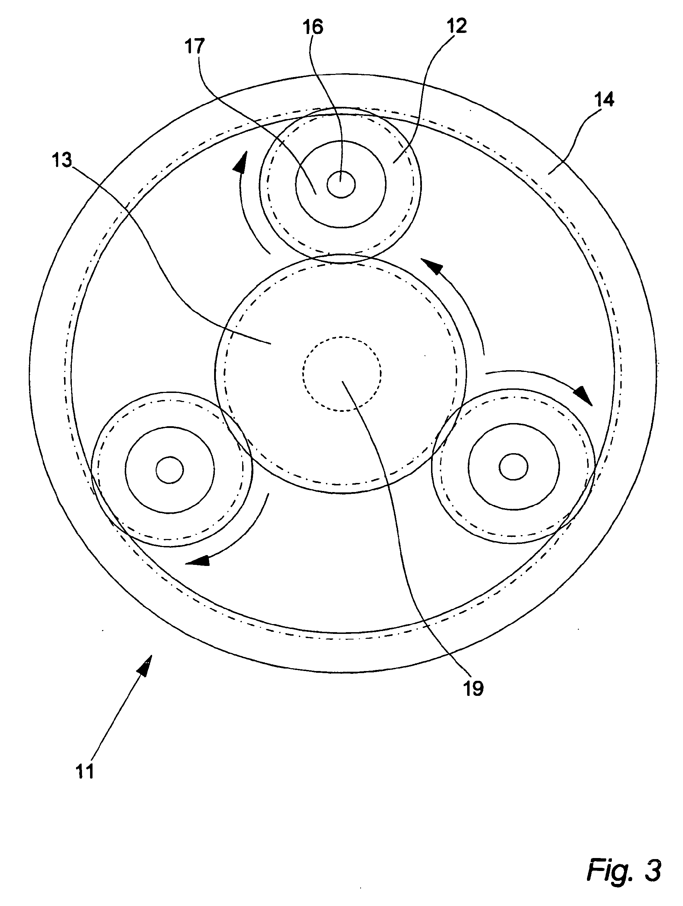

Fig. 3 illustrates as an example of prior art, an embodiment of an epicyclic gear stage 11 as seen from the front. The planet gears 12 mesh with and rotate around a sun gear 13 in the middle and they mesh with an outer annulus gear 14. The arrows indicate that the planet gears 12 all rotate in the same direction and that the sun gear 13 rotates in the opposite direction.

In this embodiment the epicyclic gear stage 11 comprise three planet gears 12, but in another embodiment it could also comprise another other number greater than or equal to 2 planet gears 12.

Each planet gear 12 is provided with one or more planet gear bearings 17 and each of the planet gears 12 with bearings 17 are mounted on a planet gear shaft 16.

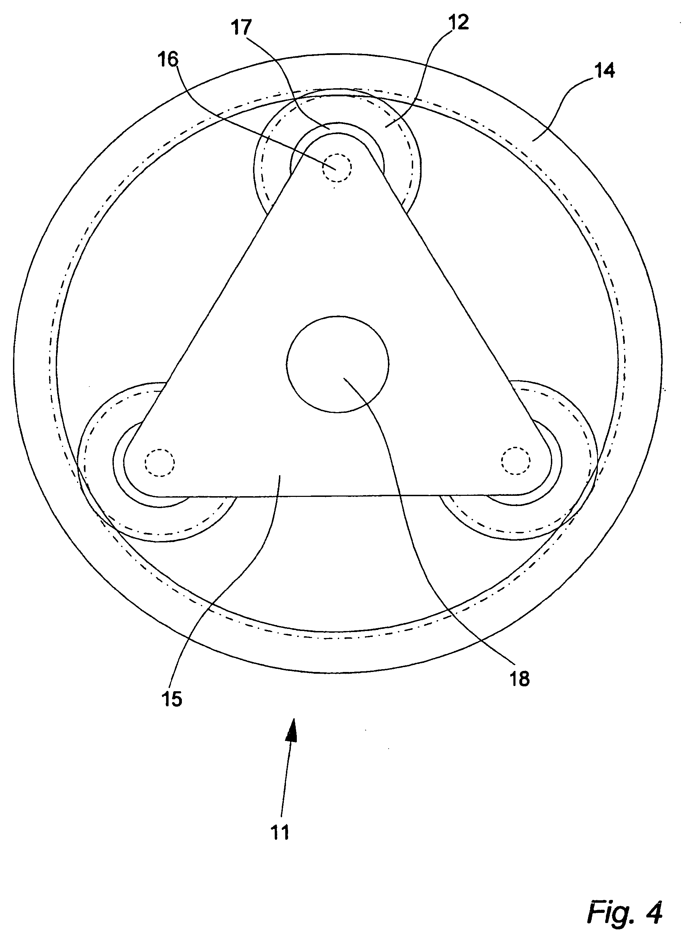

Fig. 4 illustrates as an example of prior art, an embodiment of an epicyclic gear stage 11 comprising a planet carrier 15, as seen from the front. The planet carrier 15 connects the planet gears 12 by fixating the planet gear shafts 16, making it rotate as the planet gears 12 travels around the sun gear.

Typically the annulus gear 14 is connected to a carrying frame, to the gearbox housing or is in other ways fixed, but in some epicyclic gearbox 11 types the annulus gear 14 could also rotate. Furthermore, the illustrated gears show only one stage of a gearbox. The entire gearbox could comprise a number of stages as the one shown to increase the gearing, or it could comprise a number of different stages e.g. a first stage where the sun gear is missing and the input shaft 18 rotates the annulus gear 14, which mesh with a number of planet gears 12. The planet gears 12 of the first stages is then connected to planet gears 12 of a larger size in a second stage, which mesh with a sun gear 13, which is connected to the output shaft of the epicyclic gear stage 11.

Other gearbox designs are also feasible often depending on what the gearbox is to be used for. In wind turbines the gearbox 11 may be designed to carry the entire torque load of the rotor, which means that the gearbox 11 has to be designed to handle this massive torque load on the input side of the gearbox 11, whereas the torque load on the output side of the gearbox would be significantly smaller. Epicyclic gearboxes 11 used in different wind turbines 1 or gearboxes 11 used in other applications could therefore be designed differently to meet different needs.

In this embodiment of an embodiment of an epicyclic gear stage 11, the planet carrier 15 is formed as a one piece plate connecting the three planet gears 12, but in another embodiment the planet carrier 15 could further comprise one or more bearings for guiding and stabilizing the carrier 15. This would e.g. be the case if the carrier 15 was connected to a wind turbine rotor, and the planet carrier 15 also had to transfer the entire load of the rotor. The inner ring of a large diameter bearing could then e.g. be mounted on the outside of the annulus gear 14 and the outer ring of the bearing could be connected to the planet carrier 15, which then would extend beyond the annulus gear 14, or a more or less circular planet carrier 15 could be provided with a bearing around its outer perimeter, where the outer ring of the bearing was connected to the annulus gear 14, the gearbox housing 20 or in other ways fixed.

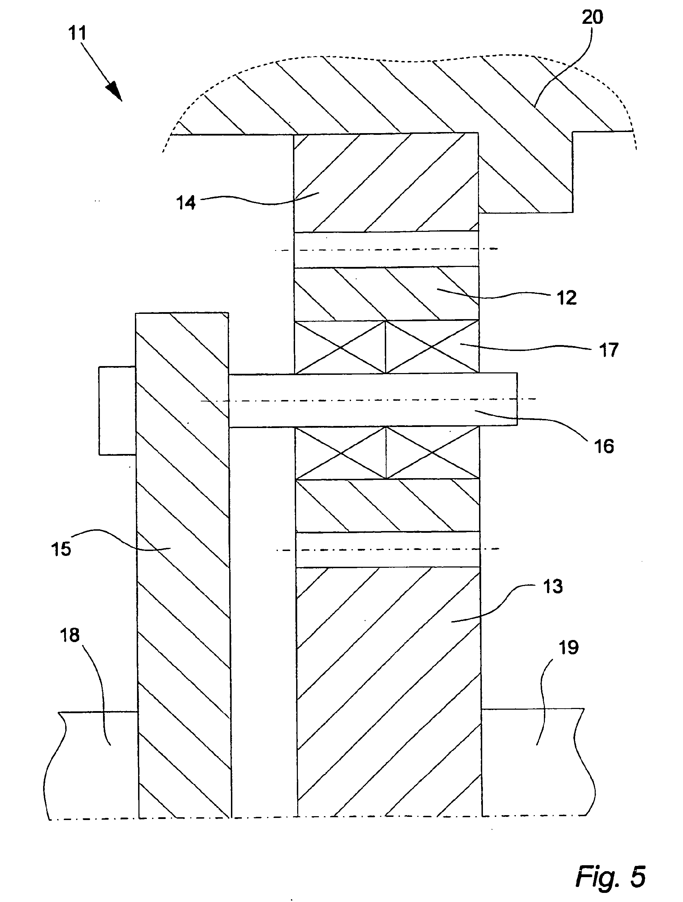

Fig. 5 illustrates as an example of prior art, a part of a cross section of an embodiment of an epicyclic gear stage 11 with a single flange carrier, as seen from the side. In this embodiment of an epicyclic gear stage 11 the planet gears 12 are each provided with two juxtaposed bearings 17 but in another embodiment the planet gears 12 could be provided with another number of bearings 17 or the bearings 17 could be placed in the planet carrier 15, where the shaft 16 then would be rigidly connected to the planet gears 12.

The planet carrier 15 is provided with an input shaft 18, which could be the low speed shaft of a wind turbine, but in another embodiment the carrier 15 could be directly coupled to the input generating equipment such as the hub of a wind turbine rotor.

The planet gears 12 mesh with the annulus gear 14, which in this embodiment is rigidly connected to the gearbox housing 20, and with the sun gear 13, which is provided with an output shaft 19 e.g. connected to another gear stage or connected to a wind turbine generator.

### Detailed description of the invention

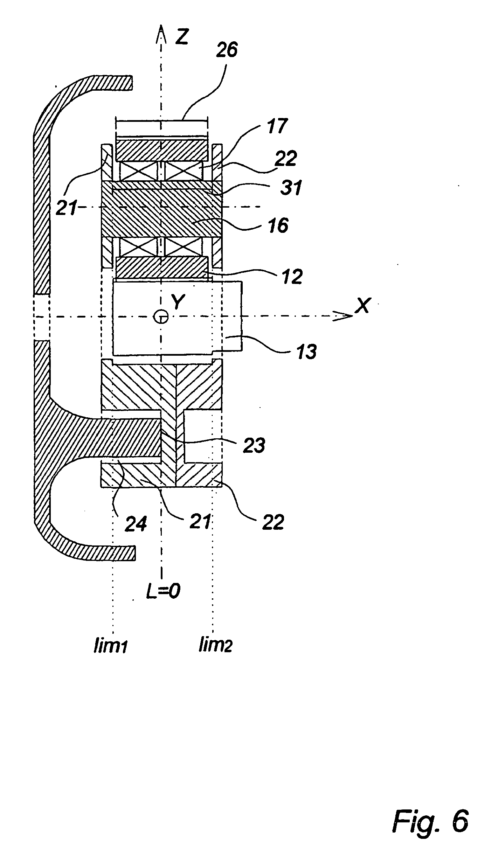

Fig. 6 illustrates schematically a part of a cross section of a first embodiment of the invented epicyclic gear stage as seen from the side. In this embodiment the planet gears 12 are supported by planet gear bearings 17 and planet gear shaft 16. The planet gear shaft 16 is supported between two planet carrier flanges 21, 22. Torque from the rotor is transferred to the planet carrier flanges 21, 22 by a torque transfer part 25 which is connected to one or both of said flanges 21, 22 at torque transferring zones 23. The torque transfer part 25 and the first and second planet carrier flanges 21, 22 are formed in such a way that there is a free space 24 between said flanges 21, 22 and the torque transfer part 25 except substantially at the torque transferring zones 23.

According to the present invention the torque transferring zones 23 are located between a first and second plane, said planes being substantially perpendicular to an axis of rotation of the sun gear 13, where the first plane is flush with an inner side of the first planet carrier 21 at a position where the gear shaft 16 is carried by the first planet carrier 21, and where the second plane is flush with an inner side of the second planet carrier 22 at a position where the gear shaft 16 is carried by the second planet carrier 22.

On fig. 6 said first and second planes are, according to this embodiment of the invention, indicated by dotted lines denoted lim1 and lim2.

Furthermore according to the embodiment depicted in fig. 6, said torque transferring zones 23 are located at a neutral plane defined as to be a plane substantial perpendicular to the axis of rotation of the sun gear 13 and substantially at the midpoint of the distance between inner sides of first and second planet carriers 31 (L = 0).

The said torque transfer part 25 is for various embodiments of the invention a part of the low speed shaft of a wind turbine, but in other embodiments the torque transfer part 25 is directly coupled to the input generating equipment such as the hub of a wind turbine rotor.

The planet gears 12 mesh with the annulus gear, which for various embodiments of the invention is rigidly connected the gearbox housing. Furthermore the planet gears 12 mesh with the sun gear 13, which is provided with an output shaft e.g. connected to another gear stage or connected to a wind turbine generator.

Some contour lines depicted in fig. 6 are left out in the following figures.

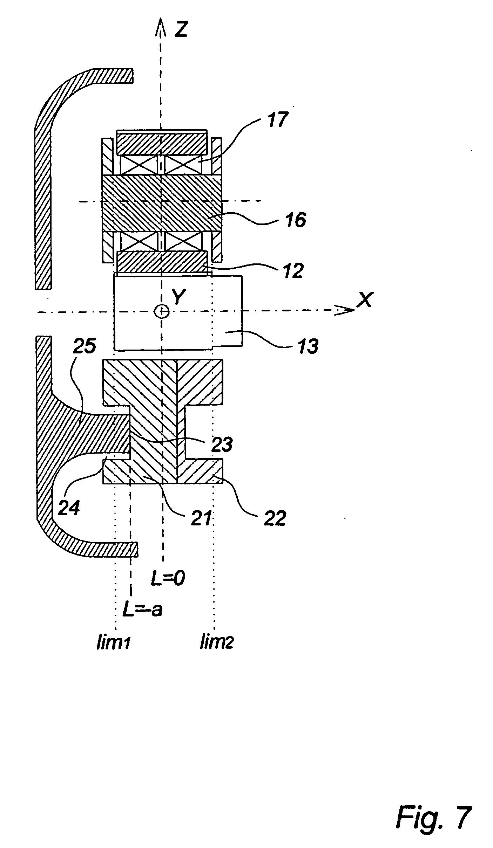

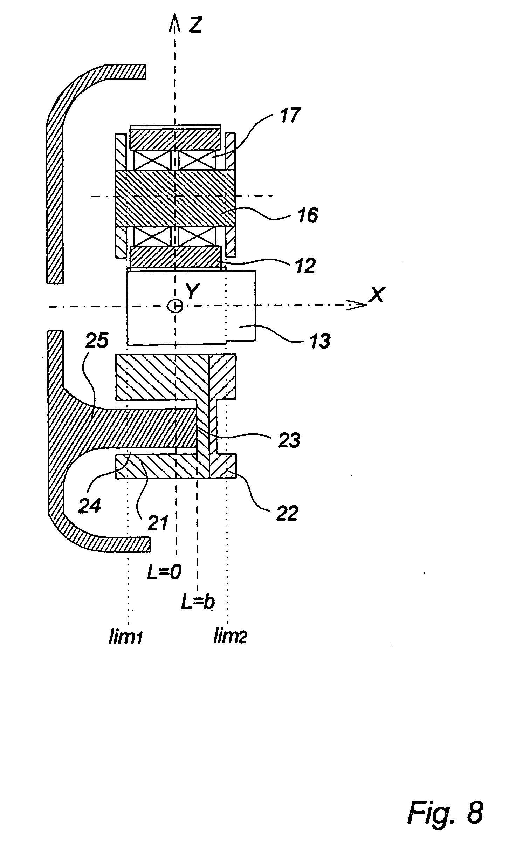

Fig. 7 and 8 illustrates schematically a part of a cross section of a second and third embodiment of the invented epicyclic gear stage 11 as seen from the side. In these embodiments the torque transferring zones 23 are dislocated from the neutral plane as defined in the explanation of fig. 6.

Fig. 7 illustrates an embodiment where the said dislocation is oriented in the negative X-axis direction i.e. at L = -a, and fig. 8 illustrates an embodiment where the said dislocation is oriented in the positive X-axis direction i.e. at L = b.

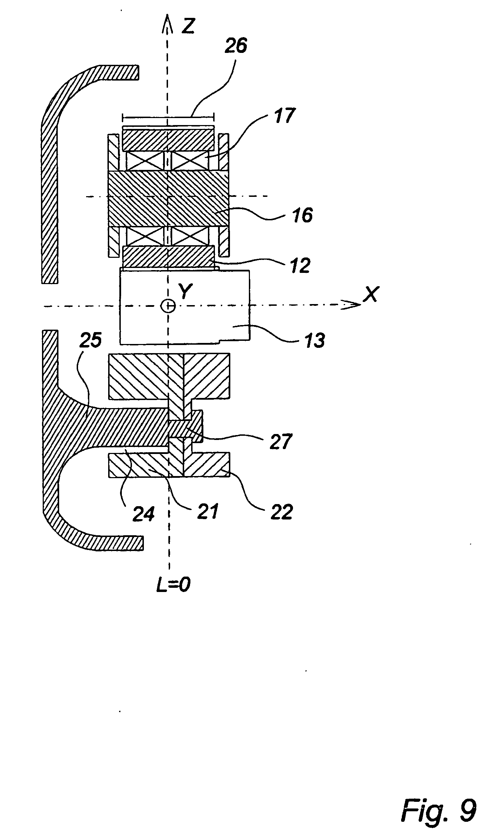

Fig. 9 illustrates schematically a part of a cross section of another embodiment of the invention comprising a protrusion 27 in carrier flange to transmit torque. The protrusion 27 may for various embodiments vary in dimensions as to adapt to the dimensions of carrier flanges 21, 22, the through holes in the carrier flanges 21, 22, the torque and forces that it may be exposed to etc.

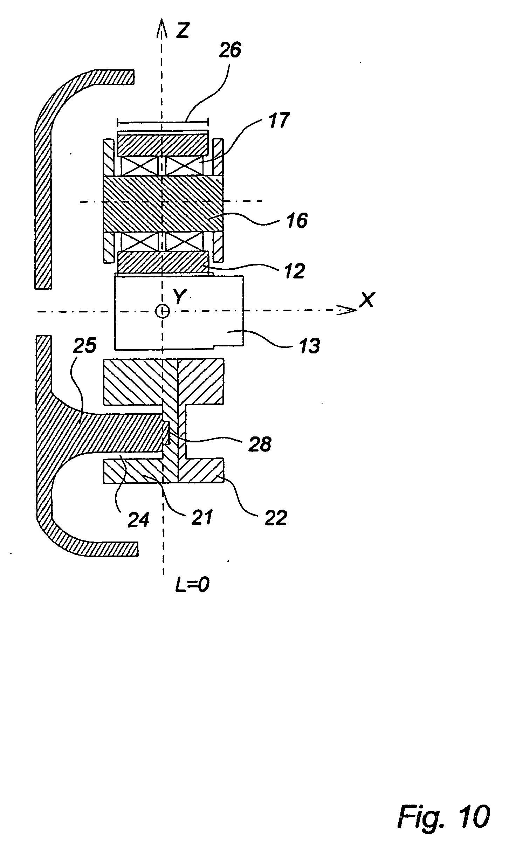

Fig. 10 illustrates schematically a part of a cross section of another embodiment of the invention comprising a cone 28 in the carrier flange to transmit torque. The cone 28 may for various embodiments vary in dimensions and in form as to adapt to the carrier flanges 21, 22 and to the torque and forces that im may be exposed to and the like.

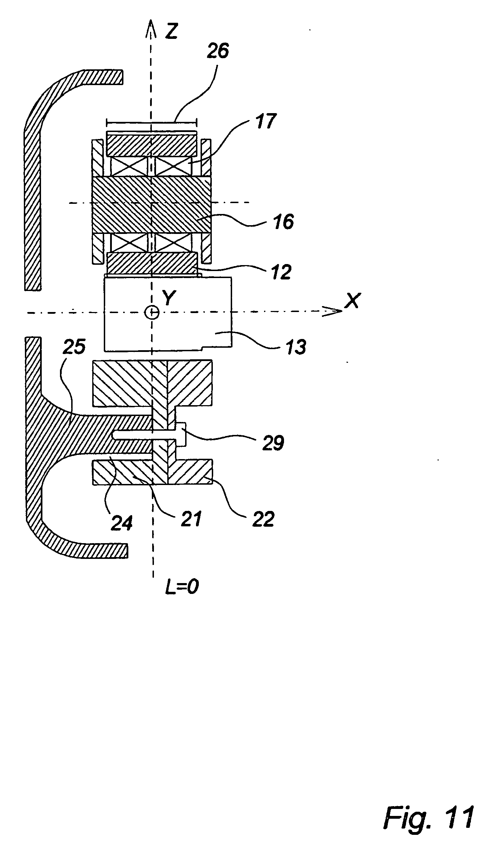

Fig. 11 illustrates schematically a part of a cross section of yet another embodiment of the invention comprising bolts 29 to connect torque transfer parts and carrier flanges. The bolts 29 may for various embodiments vary in dimensions as to adapt to the dimensions of carrier flanges 21, 22, the through holes in the carrier flanges 21, 22, the torque and forces that it may be exposed to etc. Furthermore the material of which the bolts 29 are made of may be of specific alloys that enables the bolts to carry high torques and forces.

For various embodiments of the invention, the torque transfer part 25 and said first planet carrier flange 21 are formed in one part.

For other embodiments of the invention, the first and second planet carrier flanges 21, 22 are formed in one part.

For even further embodiments of the invention, the torque transfer part 25, the first planet carrier flange 21 and the second planet carrier flange 22 are formed in one part.

For various embodiments of the invention, each of the torque transfer part 25, the first planet carrier flange 21 and the second planet carrier flange 22 may be formed in two or more parts.

### Reference list

In the drawings the following reference numbers refer to:
- 1.: Wind turbine
- 2.: Tower
- 3.: Nacelle
- 4.: Rotor
- 5.: Blade
- 6.: Low speed shaft
- 7.: Wind turbine gearbox
- 8.: Teeter mechanism
- 9.: Generator
- 10.: High speed shaft
- 11.: Epicyclic gear stage
- 12.: Planet gear
- 13.: Sun gear
- 14.: Annulus gear
- 15.: Planet carrier
- 16.: Planet gear shaft
- 17.: Planet gear bearing
- 18.: Input shaft
- 19.: Output shaft
- 20.: Gearbox housing
- 21.: First planet carrier flange
- 22.: Second planet carrier flange
- 23.: Torque transferring zones
- 24.: Free space between planet carrier flanges and torque transfer part
- 25.: Torque transfer part
- 26.: Engaging surface of planet gear
- 27.: Protrusion
- 28.: Cone
- 29.: Bolt
- 30.: Rubber trunnions
- 31.: Distance between inner sides of first and second planet carriers

## Claims

1. A wind turbine (1) comprising a wind turbine gearbox (7) with an epicyclic gear stage (11), said epicyclic gear stage (11) comprising
a sun gear (13),
at least two planet gears (12), engaged with said sun gear (13), each supported by a planet gear shaft (16),
an annulus gear (14),
a first planet carrier flange (21) connected to one side of the at least two of said planet gears (12), and
a second planet carrier flange (22) connected to the other side of the at least two of said planet gears (12),
wherein torque from the wind turbine rotor (4) is transferred via a torque transfer part (25) connected to at least one of said first and second planet carrier flanges (21,22) at one or more torque transferring zones (23),
**characterised in that**
said one or more torque transferring zones (23) are located between a first and a second plane, said planes being substantially perpendicular to an axis of rotation of the sun gear (13),
where the first plane is flush with the inner side of the first planet carrier flange (21) at the positions where the planet gear shafts (16) are carried by the first planet carrier flange (21), and
where the second plane is flush with the inner side of the second planet carrier flange (22) at the positions where the plant gear shafts (16) are carried by the second planet carrier flange (22).

2. A wind turbine (1) according to claim 1, wherein said a first and a second plane are planes substantial perpendicular to the axis of rotation of the sun gear (13), and
where said first plane is flush with one end of the planet gears (12), and
where said second plane is flush with the other end of the planet gears (12).

3. A wind turbine (1) according to claim 1 or 2, wherein said a first and a second plane are planes substantial perpendicular to the axis of rotation of the sun gear (13), and
where said first plane comprises a first point of the engaging surface of the planet gears (12), and
where said second plane comprises a second point of the engaging surface of the planet gears (12).

4. A wind turbine (1) according to any of the preceding claims, wherein said first planet carrier flange (21) and said second planet carrier flange (22) are joined together at said torque transferring zones (23) such as by casting, welding, joint bolts, rivets etc.

5. A wind turbine (1) according to any of the preceding claims, wherein said one side is the drive end of a gear stage (11) and said other side is the non-drive end of a gear stage (11).

6. A wind turbine (1) according to any of the preceding claims, wherein said torque transfer part (25) and said first planet carrier flange (21) are formed in one part.

7. A wind turbine (1) according to any of claims 1 to 5, wherein said first planet carrier flange (21) and said second planet carrier flange (22) are formed in one part.

8. A wind turbine (1) according to any of claims 1 to 5, wherein said torque transfer part (25) and said first planet carrier flange (21) and said second planet carrier flange (22) are formed in one part.

9. A wind turbine (1) according to any of the preceding claims, wherein said torque transferring zones (23) are located substantially at the midpoint of the distance (31) between inner sides of first and second planet carriers (21,22).

10. A wind turbine (1) according to any of claims 1 to 8, wherein said torque transferring zones (23) are located at an offset from the middle point of the midpoint of the distance (31) between inner sides of first and second planet carriers (21,22).

11. A wind turbine (1) according to claim 10, wherein said offset is in the range of 0 to 50 % of the distance (31) between inner sides of first and second planet carriers (21,22), preferable in the range of 5 to 20 %.

12. A wind turbine (1) according to any of the preceding claims, wherein said sun gear (13) and said planet gear (12) and said annulus gear (14) are single helical gears.

13. A wind turbine (1) according to any of the preceding claims, wherein said torque transfer part (25) is connected to said least one of said first and second planet carrier flanges (21,22) at one or more torque transferring zones (23) by one or more couplings such as protrusions (27), cones (28), bolts (29) etc..

14. A wind turbine (1) according to any of the preceding claims, wherein said annulus gear (14) rotates during operation.

## Patentansprüche

1. Windturbine (1), die eine Getriebeeinheit (7) für Windturbinen mit einer Planetengetriebestufe (11) umfasst, wobei die Planetengetriebestufe (11) Folgendes umfasst:
ein Sonnenrad (13),
wenigstens zwei Planetenräder (12), die mit dem Sonnenrad (13) im Eingriff sind und von denen jedes von einer Planetenradwelle (16) getragen wird,
ein Hohlrad (14),
einen ersten Planetenträgerflansch (21), der mit einer Seite der wenigstens zwei Planetenräder (12) verbunden ist, und
einen zweiten Planetenträgerflansch (22), der mit der anderen Seite der wenigstens zwei Planetenräder (12) verbunden ist,
wobei Drehmoment vom Windturbinenrotor (4) über ein Drehmomentübertragungsteil (25) übertragen wird, das mit wenigstens einem von dem ersten und zweiten Planetenträgerflansch (21, 22) in einer oder mehreren Drehmomentübertragungszonen (23) verbunden ist,
**dadurch gekennzeichnet, dass**
die eine oder mehreren Drehmomentübertragungszonen (23) zwischen einer ersten und einer zweiten Ebene angeordnet sind, wobei diese Ebenen im Wesentlichen senkrecht zu einer Drehachse des Sonnenrads (13) stehen,
wobei die erste Ebene bündig mit der inneren Seite des ersten Planetenträgerflansches (21) ist, und dies an einer Position, bei der die Planetenradwellen (16) vom ersten Planetenträgerflansch (21) getragen werden, und
wobei die zweite Ebene bündig mit der inneren Seite des zweiten Planetenträgerflansches (22) ist, und dies an einer Position, bei der die Planetenradwellen (16) vom zweiten Planetenträgerflansch (22) getragen werden.

2. Windturbine (1) nach Anspruch 1, wobei die erste und zweite Ebene Ebenen sind, die im Wesentlichen senkrecht zur Drehachse des Sonnenrads (13) stehen, und
wobei die erste Ebene mit einem Ende der Planetenräder (12) bündig ist, und
wobei die zweite Ebene mit dem anderen Ende der Planetenräder (12) bündig ist.

3. Windturbine (1) nach Anspruch 1 oder 2, wobei die erste und zweite Ebene Ebenen sind, die im Wesentlichen senkrecht zur Drehachse des Sonnenrads (13) stehen, und
wobei die erste Ebene einen ersten Punkt der Eingriffsfläche der Planetenräder (12) umfasst, und
wobei die zweite Ebene einen zweiten Punkt der Eingriffsfläche der Planetenräder (12) umfasst.

4. Windturbine (1) nach einem der vorhergehenden Ansprüche, wobei der erste Planetenträgerflansch (21) und der zweite Planetenträgerflansch (22) in den Drehmomentübertragungszonen (23) miteinander verbunden sind, und dies beispielsweise durch Gießen, Schweißen, Verbindungsbolzen, Nieten etc.

5. Windturbine (1) nach einem der vorhergehenden Ansprüche, wobei die eine Seite das Antriebsende einer Getriebestufe (11) ist und die andere Seite das Nicht-Antriebsende einer Getriebestufe (11) ist.

6. Windturbine (1) nach einem der vorhergehenden Ansprüche, wobei das Drehmomentübertragungsteil (25) und der erste Planetenträgerflansch (21) einteilig ausgebildet sind.

7. Windturbine (1) nach einem der Ansprüche 1 bis 5, wobei der erste Planetenträgerflansch (21) und der zweite Planetenträgerflansch (22) einteilig ausgebildet sind.

8. Windturbine (1) nach einem der Ansprüche 1 bis 5, wobei das Drehmomentübertragungsteil (25) und der erste Planetenträgerflansch (21) und der zweite Planetenträgerflansch (22) einteilig ausgebildet sind.

9. Windturbine (1) nach einem der vorhergehenden Ansprüche, wobei die Drehmomentübertragungszonen (23) im Wesentlichen am Mittenpunkt des Abstands (31) zwischen den inneren Seiten der ersten und zweiten Planetenträger (21, 22) angeordnet sind.

10. Windturbine (1) nach einem der Ansprüche 1 bis 8, wobei die Drehmomenttibertragungszonen (23) mit einem Versatz vom mittleren Punkt des Mittenpunkts des Abstands (31) zwischen den inneren Seiten der ersten und zweiten Planetenträger (21, 22) angeordnet sind.

11. Windturbine (1) nach Anspruch 10, wobei der Versatz im Bereich von 0 bis 50% des Abstands (31) zwischen den inneren Seiten der ersten und zweiten Planetenträger (21, 22) liegt, und vorzugsweise im Bereich von 5 bis 20%.

12. Windturbine (1) nach einem der vorhergehenden Ansprüche, wobei das Sonnenrad (13) und das Planetenrad (12) und das Hohlrad (14) einfach spiralverzahnte Zahnräder sind.

13. Windturbine (1) nach einem der vorhergehenden Ansprüche, wobei das Drehrnomentobertragungsteil (25) mit dem wenigstens einen von dem ersten und dem zweiten Planetenträgerflansch (21, 22) in einer oder mehreren Drehmomentübertragungszonen (23) verbunden ist, und dies durch eine oder mehrere Verbindungselemente, wie etwa Vorsprünge (27), Kegel (28), Bolzen (29) etc.

14. Windturbine (1) nach einem der vorhergehenden Ansprüche, wobei das Hohlrad (14) im Betrieb rotiert.

## Revendications

1. Eolienne (1) comprenant un multiplicateur d'éolienne (7) avec un étage de train épicycloïdal (11), ledit étage de train épicycloïdal (11) comprenant un pignon solaire (13),
au moins deux roues planétaires (12), mises en prise avec ledit pignon solaire (13), chacune supportée par un arbre de roue planétaire (16),
une couronne (14),
un premier flasque porte-satellites (21) raccordé à un côté des au moins deux desdites roues planétaires (12), et
un second flasque porte-satellites (22) raccordé à l'autre côté des au moins deux desdites roues planétaires (12),
dans laquelle le couple provenant du rotor d'éolienne (4) est transféré via une partie de transfert de couple (25) raccordée à au moins l'un desdits premier et second flasques porte-satellites (21, 22) au niveau d'une ou plusieurs zones de transfert de couple (23),
**caractérisée en ce que**
lesdites une ou plusieurs zones de transfert de couple (23) sont situées entre un premier et un second plan, lesdits plans étant sensiblement perpendiculaires à un axe de rotation du pignon solaire (13),
où le premier plan est de niveau avec le côté interne du premier flasque porte-satellites (21) au niveau des positions où les arbres de roue planétaire (16) sont portés par le premier flasque porte-satellites (21), et
où le second plan est de niveau avec le côté interne du second flasque porte-satellites (22) au niveau des positions où les arbres de roue planétaire (16) sont portés par le second flasque porte-satellites (22).

2. Eolienne (1) selon la revendication 1, dans laquelle lesdits premier et second plans constituent des plans sensiblement perpendiculaires à l'axe de rotation du pignon solaire (13), et
où ledit premier plan est de niveau avec une extrémité des roues planétaires (12), et
où ledit second plan est de niveau avec l'autre extrémité des roues planétaires (12).

3. Eolienne (1) selon la revendication 1 ou 2, dans laquelle lesdits premier et second plans constituent des plans sensiblement perpendiculaires à l'axe de rotation du pignon solaire (13), et
où ledit premier plan comprend un premier point de la surface de mise en prise des roues planétaires (12), et
où ledit second plan comprend un second point de la surface de mise en prise des roues planétaires (12).

4. Eolienne (1) selon l'une quelconque des revendications précédentes, dans laquelle ledit premier flasque porte-satellites (21) et ledit second flasque porte-satellites (22) sont joints ensemble au niveau desdites zones de transfert de couple (23) tel que par coulage, soudage, des boulons mécaniques à bout pointeau, des rivets, etc.

5. Eolienne (1) selon l'une quelconque des revendications précédentes, dans laquelle ledit premier côté est l'extrémité d'entraînement d'un étage de train (11) et ledit autre côté est l'extrémité de non-entraînement d'un étage de train (11).

6. Eolienne (1) selon l'une quelconque des revendications précédentes, dans laquelle ladite partie de transfert de couple (25) et ledit premier flasque porte-satellites (21) sont formés d'un seul tenant.

7. Eolienne (1) selon l'une quelconque des revendications 1 à 5, dans laquelle ledit premier flasque porte-satellites (21) et ledit second flasque porte-satellites (22) sont formés d'un seul tenant.

8. Eolienne (1) selon l'une quelconque des revendications 1 à 5, dans laquelle ladite partie de transfert de couple (25) et ledit premier flasque porte-satellites (21) et ledit second flasque porte-satellites (22) sont formés d'un seul tenant.

9. Eolienne (1) selon l'une quelconque des revendications précédentes, dans laquelle lesdites zones de transfert de couple (23) sont situées sensiblement au milieu de la distance (31) entre les côtés internes des premier et second porte-satellites (21, 22).

10. Eolienne (1) selon l'une quelconque des revendications 1 à 8, dans laquelle lesdites zone de transfert de couple (23) sont situées décalées par rapport au point médian du milieu de la distance (31) entre les côtés internes des premier et second porte-satellites (21, 22).

11. Eolienne (1) selon la revendication 10, dans laquelle ledit décalage est dans la plage de 0 à 50 % de la distance (31) entre les côtés internes des premier et second porte-satellites (21, 22), de préférence dans la plage de 5 à 20 %.

12. Eolienne (1) selon l'une quelconque des revendications précédentes, dans laquelle ledit pignon solaire (13) et ladite roue planétaire (12) et ladite couronne (14) sont des engrenages hélicoïdaux simples.

13. Eolienne (1) selon l'une quelconque des revendications précédentes, dans laquelle ladite partie de transfert de couple (25) est raccordée audit au moins un des premier et second flasques porte-satellites (21, 22) au niveau d'une ou plusieurs zones de transfert de couple (23) par un ou plusieurs couplages tels que des protubérances (27), des cônes (28), des boulons (29), etc.

14. Eolienne (1) selon l'une quelconque des revendications précédentes, dans laquelle ladite couronne (14) tourne pendant un fonctionnement.
